# DEMANDE DE BREVET EUROPEEN

(11) **EP 0 807 542 A1**
(43) Date de publication de la demande: **19.11.1997**
(21) Numéro de dépôt: 97400542.3
(22) Date de dépôt: 12.03.1997
(51) Int. Cl.: B60D 1/00, B60D 7/00, F16B 5/00

(54) **Chariot de manutention à moyens de fixation**

(30) Priorité: 15.05.1996 FR 9606109
(71) Demandeur: VALEO EQUIPEMENTS ELECTRIQUES MOTEUR, 94000 Créteil (FR)
(72) Inventeur: Godin, Bruno, 62780 Cucq (FR); Ray, Jacky, 62200 Boulogne Sur Mer (FR); Hanquez, Christian, 62650 Zoteux (FR)
(74) Mandataire: Le Forestier, Eric

(57) **Abrégé**

Le chariot de manutention comporte un plateau (2) de forme générale rectangulaire présentant quatre faces latérales, et des roues (6) fixées au plateau. Au moins une face latérale du plateau présente une gorge (8) s'étendant jusqu'à une extrémité de cette face, le chariot comportant un coulisseau allongé (12) mobile à coulissement dans la gorge (8) et adapté pour s'étendre simultanément dans les gorges de deux chariots adjacents.

## Description

L'invention concerne les chariots de manutention.

On connaît des chariots de manutention destinés à transporter de poste en poste des pièces en cours de fabrication. Chaque chariot comporte un plateau de forme rectangulaire et des roues fixées au plateau. Il est connu de relier les chariots à la suite les uns des autres pour constituer un train de chariots, la face avant de chaque chariot présentant par exemple un crochet destiné à être engagé dans un orifice associé de la face arrière du chariot précédent. La connexion ainsi réalisée est souple et permet notamment la rotation relative des chariots autour d'un axe de rotation vertical en vue de permettre au train de suivre un chemin courbe. Cependant, ce type de connexion n'est pas adapté pour transporter les chariots ainsi connectés les uns aux autres par des moyens de transport classiques, par exemple camion ou chemin de fer. Elle n'est pas non plus adaptée pour immobiliser convenablement les chariots les uns aux autres à un poste de travail. En effet, pour ces deux applications entre autres, la possibilité de rotation des chariots adjacents autour de l'axe vertical est un facteur d'instabilité.

On connaît d'après le document GB-2 280 166 un chariot rectangulaire, présentant deux faces longitudinales opposées l'une à l'autre pourvues de profilés longitudinaux en forme de "L", inversés l'un par rapport à l'autre et adaptés à coopérer ensemble pour maintenir deux chariots accolés par leurs faces longitudinales. Ainsi, on interdit la rotation relative des deux chariots autour d'un axe de rotation vertical et on améliore la stabilité de l'ensemble constitué par les deux chariots.Toutefois, pour associer les deux chariots, il est nécessaire d'engager le profilé de l'un des chariots dans le profilé de l'autre chariot, en déplaçant les deux chariots l'un par rapport à l'autre suivant la direction longitudinale des chariots. Cette manoeuvre est relativement malaisée à exécuter. De plus, cette difficulté se trouve considérablement accrue lorsque les chariots sont de grandes dimensions, ou lorsque les chariots supportent une charge lourde.

Un but de l'invention est de fournir un chariot d'un autre type, présentant une structure simple, adapté à être fixé à un chariot du même type pour leur stockage ou leur transport de sorte que la rotation relative des chariots autour d'un axe vertical est empêchée, et tel que la manoeuvre destinée à associer deux chariots soit aisée à accomplir, même si les chariots sont de grandes dimensions et/ou supportent une charge lourde.

En vue de la réalisation de ce but, on prévoit selon l'invention un chariot de manutention comportant un plateau de forme générale rectangulaire présentant quatre faces latérales, et des roues fixées au plateau, dans lequel au moins une face latérale du plateau présente une gorge s'étendant jusqu'à une extrémité de cette face, le chariot comportant un coulisseau allongé mobile à coulissement dans la gorge et adapté pour s'étendre simultanément dans les gorges de deux chariots adjacents.

Ainsi, le coulisseau bloque les chariots en translation relative suivant les directions verticale et horizontale perpendiculaires au coulisseau, et bloque la rotation relative des chariots autour d'un axe vertical. Cette fixation mutuelle des chariots est donc adaptée pour le transport par des moyens de transport classiques des chariots ainsi fixés les uns aux autres, ou pour leur immobilisation à un poste de travail. De plus, pour associer deux chariots entre eux, il suffit de disposer les deux chariots dans la position où ils doivent être associés, puis d'engager le coulisseau pour qu'il s'étende dans les deux gorges. La trajectoire relative suivie par les deux chariots pour les placer dans cette position est indifférente. La manoeuvre des deux chariots en vue de les associer est donc aisée, et ce même si les chariots sont de grandes dimensions et/ou supportent une charge lourde.

Avantageusement, le coulisseau est adapté pour s'étendre simultanément dans les gorges de deux chariots contigus en contact mutuel par leurs faces latérales.

Ainsi, l'appui des faces latérales l'une sur l'autre empêche la translation relative des chariots en rapprochement l'un de l'autre suivant la direction du coulisseau, ce qui améliore la fixation. De plus, cette fixation facilite le gerbage de plusieurs groupes de chariots ainsi assemblés.

De préférence, le chariot comporte des moyens de blocage du coulissement du coulisseau s'étendant simultanément dans les deux gorges.

Ainsi, on interdit la translation relative des chariots en éloignement et en rapprochement l'un de l'autre suivant la direction du coulisseau, ce qui améliore encore la fixation. La fixation est ainsi rigide (à l'exception de la rotation relative des chariots autour de l'axe du coulisseau).

Avantageusement, la gorge et le coulisseau sont conformés de sorte que le coulisseau est mobile à rotation dans la gorge par rapport au chariot autour d'un axe longitudinal du coulisseau, les moyens de blocage comprenant au moins une encoche s'étendant sur la face latérale du plateau et débouchant dans la gorge, et au moins deux pattes du coulisseau s'étendant radialement en saillie du coulisseau, l'encoche étant conformée et disposée pour que les pattes du coulisseau soient reçues simultanément dans les encoches de deux chariots adjacents.

Avantageusement, le chariot comporte des moyens pour limiter le coulissement du coulisseau dans la gorge en direction du centre de la face associée et/ou en direction opposée à ce centre, ces moyens de limitation étant indépendants des moyens de blocage.

Avantageusement, chaque face latérale du chariot présente une gorge.

Ainsi, les chariots peuvent être assemblés entre eux à la fois suivant les deux directions du plateau, suivant une conformation en pavage.

Avantageusement, la gorge est suffisamment profonde pour que le coulisseau s'étende totalement en retrait de la face latérale présentant la gorge.

Ainsi, le coulisseau n'augmente pas l'encombrement latéral du chariot. On réduit ainsi l'encombrement total de chariots disposés les uns à côté des autres. De plus, on peut accoler l'une contre l'autre les faces de deux chariots comportant une gorge et un coulisseau, par exemple pour fixer les chariots au moyen des autres faces.

On prévoit également selon l'invention un ensemble comprenant des chariots de manutention selon l'invention.

D'autres caractéristiques et avantages de l'invention apparaîtront encore à la lecture de la description suivante d'un mode de réalisation préféré et d'une variante donnés à titre d'exemples non-limitatifs. Aux dessins annexés:
- la figure 1 est une vue de côté du chariot selon un mode de réalisation de l'invention;
- la figure 2 est une vue d'extrémité du chariot de la figure 1;
- la figure 3 est une vue partielle en coupe du chariot selon le plan III-III de la figure 1;
- la figure 4 est une vue d'extrémité de deux chariots fixés l'un à l'autre ;
- la figure 5 est une vue partielle en coupe axiale de la gorge et d'une extrémité du coulisseau, dans une variante de réalisation ; et
- la figure 6 est une vue partielle en coupe transversale de la gorge et du coulisseau, dans cette variante.

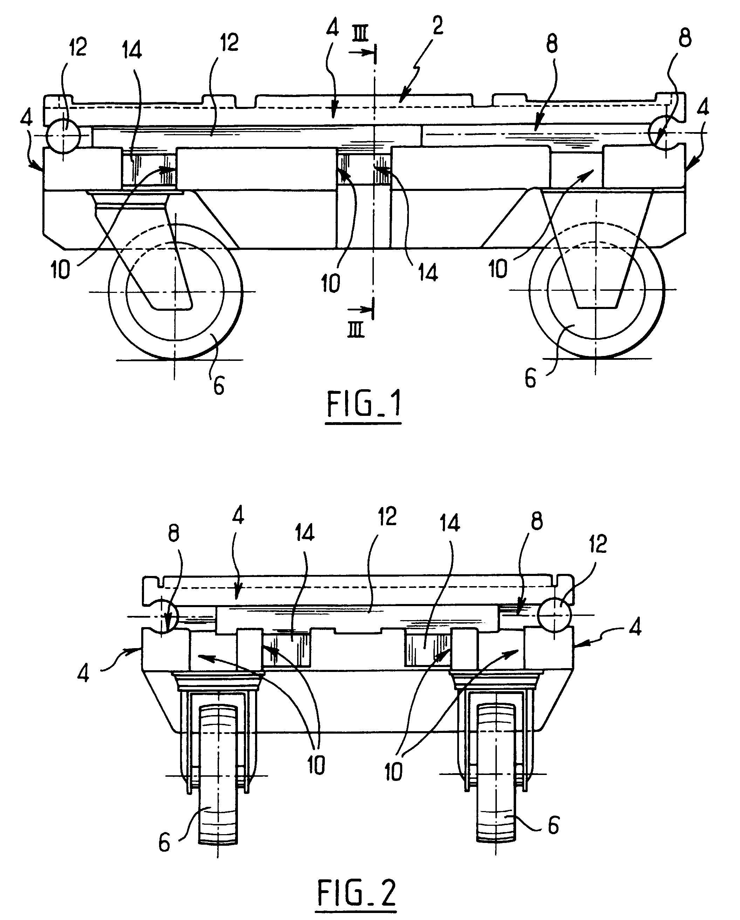

En référence aux figures 1 à 3, le chariot 1 selon un mode de réalisation de l'invention comporte un plateau 2 de forme générale rectangulaire plane présentant quatre faces latérales 4, à savoir deux faces longitudinales et deux faces transversales d'extrémité, formant les côtés du rectangle et dont les extrémités délimitent les coins du plateau. Le chariot comporte quatre roues 6 fixées à une face inférieure du plateau.

Chaque face latérale 4 du plateau présente une gorge 8 s'étendant d'une extrémité à l'autre de la face. La gorge de chaque face débouche aux extrémités de cette face perpendiculairement aux faces latérales 4 adjacentes. La gorge 8 est cylindrique et présente deux bords parallèles formant la jonction de la gorge avec la face latérale 4. Le cylindre formant la gorge 8 s'étend totalement en retrait de la face latérale 4, la profondeur de la gorge par rapport à la face latérale étant supérieure au diamètre du cylindre correspondant.

Chaque face latérale 4 présente des encoches 10 s'étendant sur la face latérale du plateau perpendiculairement à la direction longitudinale de la gorge 8 et débouchant dans celle-ci. Ces encoches 10 sont au nombre de trois pour les faces longitudinales et de quatre pour les faces transversales.

Le chariot comporte deux coulisseaux allongés 12 mobiles à coulissement respectivement dans l'une des faces longitudinale 4 et l'une des faces transversales 4. Les deux faces portant les coulisseaux 12 sont ainsi adjacentes. Le coulisseau a une forme cylindrique male correspondant à la forme femelle de la gorge 8 et adaptée pour permettre le coulissement du coulisseau dans la gorge et la rotation du coulisseau autour de son axe longitudinal, dans la gorge, par rapport au chariot. Chaque coulisseau 12 comporte deux pattes 14 s'étendant radialement en saillie de la paroi cylindrique du coulisseau. Chaque encoche 10 d'une gorge 8 est conformée pour recevoir une patte 14 du coulisseau de cette gorge ou d'un coulisseau engagé dans cette gorge.

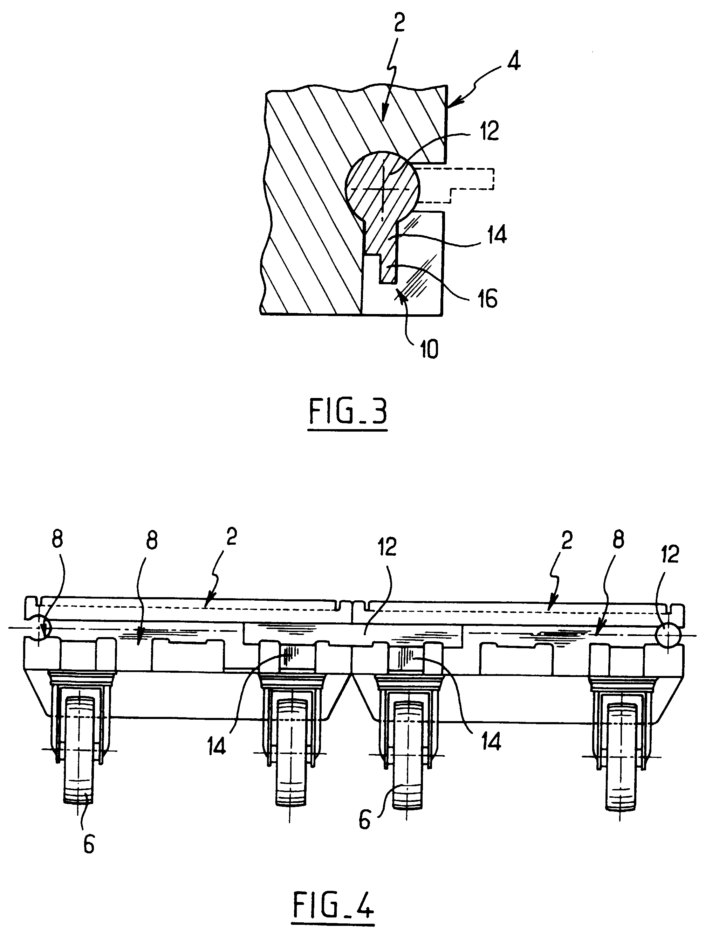

En référence à la figure 4, chaque coulisseau 12 est adapté pour s'étendre simultanément dans les gorges 8 de deux chariots identiques contigus en contact mutuel par leurs faces latérales 4 longitudinales ou transversales.

Sur les faces longitudinales, une encoche 10 est disposée au centre de cette face. Les deux autres encoches sont séparées de l'encoche centrale d'une distance égale à la distance séparant les pattes 14 du coulisseau 12 ou d'un coulisseau associé. De plus, pour chacune de ces deux encoches 10, la distance de l'encoche à l'extrémité la plus proche de la face est égale à la moitié de la distance séparant les pattes 14 du coulisseau ou d'un coulisseau associé.

Sur les faces transversales 6, deux encoches 10 sont séparées du centre de la face par une distance égale à la moitié de la distance séparant les pattes 14 du coulisseau ou d'un coulisseau associé. De plus, pour chacune des deux autres encoches 10, la distance de l'encoche à l'extrémité la plus proche de la face est égale à la moitié de la distance séparant les pattes 14 du coulisseau ou d'un coulisseau associé.

Ainsi, les encoches 10 de chaque face 4 sont disposées pour que les pattes 14 du coulisseau 12 ou d'un coulisseau associé soient reçues simultanément dans les encoches de deux chariots adjacents. Les pattes 14 et les encoches 10 constituent ainsi des moyens de blocage 12 du coulissement d'un coulisseau 12 reçu dans les gorges 8 des faces des chariots contigus comme le montre la figure 4. En outre, les encoches 10 d'une même gorge sont disposées pour recevoir simultanément les deux pattes 14 du coulisseau 8 associé à cette gorge lorsque le coulisseau n'est pas utilisé pour la fixation de chariots. C'est la position de repos du coulisseau. En position de fixation ou de repos du coulisseau, la gorge 8 est suffisamment profonde pour que le coulisseau 12 s'étende totalement en retrait de la face latérale 4 présentant la gorge lorsque les pattes sont reçues dans les encoches. Ainsi, les faces latérales de chariots contigus peuvent être placées en contact mutuel.

En référence à la figure 3, au moins une patte 14 de chaque coulisseau 12 comporte une portion de bord 16 s'étendant à distance de la paroi du plateau lorsque la patte est reçue dans l'encoche. On facilite ainsi la préhension du coulisseau au moyen d'une patte par un utilisateur.

Pour assembler deux chariots de ce type, on accole les deux chariots en plaçant par exemple leurs faces longitudinales 4 respectives en contact mutuel en regard, et bord à bord. A une extrémité de l'ensemble, une face transversale d'un chariot comporte un coulisseau 12 mais pas la face transversale adjacente de l'autre chariot. On fait pivoter le coulisseau dans la gorge 8 autour de son axe hors de sa position de repos pour extraire les pattes 14 des encoches 10, comme représenté sur la figure 3 en pointillé. Puis, en tenant le coulisseau 12 par une patte 14, on le fait coulisser jusqu'à le faire pénétrer partiellement dans la gorge 8 de la face transversale adjacente, suffisamment pour pouvoir à nouveau faire pivoter le coulisseau en une position de fixation dans laquelle une patte 14 est reçue dans une encoche 10 de la face transversale 4 d'un chariot et l'autre patte est reçue dans une encoche 10 de la face transversale 4 de l'autre chariot. On peut fixer les chariots de la même façon par leurs autres faces transversales. A partir de deux blocs séparés de deux chariots ainsi assemblés, on peut fixer ces deux blocs entre eux de la même façon par les faces longitudinales 4 des chariots. On réalise ainsi un bloc de quatre chariots. On peut ainsi fixer entre eux autant de chariots qu'on le souhaite.

Les chariots ainsi assemblés peuvent être transportés par tous moyens de transport, notamment par camion ou par chemin de fer. Les blocs de chariots peuvent être gerbés par exemple lorsque les chariots sont vides ou lorsque les chariots sont chargés de bacs classiques adaptés au gerbage d'un chariot sur l'autre.

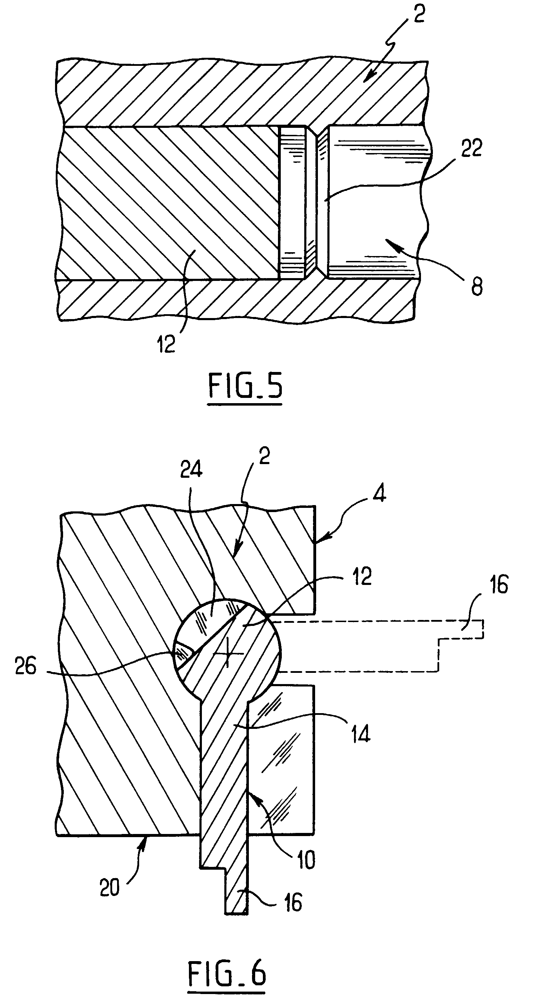

Une variante de réalisation est illustrée aux figures 5 et 6. Dans cette variante, les faces longitudinales 4 présentent quatre encoches 10, et la gorge 8 associée comporte deux coulisseaux 12, disposés de part et d'autre du centre de la face. Les quatre encoches sont disposées de sorte que chaque paire d'encoches 10 adjacente à un extrémité de la gorge permet de recevoir les pattes 14 d'un coulisseau en position de repos, les deux coulisseaux pouvant être placés en même temps en position de repos. Les encoches 10 les plus proches des extrémités servent à la fixation des chariots entre eux comme précédemment.

De plus, les gorges 8 et les coulisseaux 12 associés aux faces transversales ont des dimensions différentes, par exemple réduites, par rapport aux dimensions des gorges et coulisseaux associés aux faces longitudinales.

En outre, en référence à la figure 6, au moins l'une des pattes 14 a une longueur, suivant la direction radiale à l'axe du coulisseau, sensiblement plus grande que la dimension correspondante de l'encoche 10 recevant la patte. Ainsi, en position de repos, la patte 14 s'étend en saillie de la face inférieure 20 du chariot adjacente à la face latérale 4. De la sorte, un opérateur peut très aisément manoeuvrer la patte 14 pour la sortie de l'encoche. Par exemple, il peut sans difficulté exécuter cette manoeuvre avec l'extrémité de son pied, ce qui lui évite de se baisser. Il s'ensuit une économie de temps et de mouvement.

La gorge 8 présente un rétrécissement circulaire ou renflement 22 s'étendant en saillie dans la gorge, et présentant un plus petit diamètre inférieur à un diamètre de l'extrémité du coulisseau 12 destinée à venir en regard. Ce rétrécissement 22 constitue une butée pour l'extrémité du coulisseau coulissant dans la gorge. Ce rétrécissement est disposé de sorte qu'il limite le coulissement du coulisseau en direction du centre de la face 4 portant le coulisseau, une fois que le coulisseau a été déplacé en direction de ce centre au-delà de sa position de repos.

En référence à la figure 6, le coulisseau 12 présente sur une partie de sa longueur un évidement externe 24 dans sa surface cylindrique, cet évidement débouchant à l'extrémité du coulisseau opposée au centre de la face. La gorge 8 comprend une butée 26 s'étendant en saillie dans la gorge. L'évidement 24 et la butée 26 sont configurés de sorte que la butée peut être reçue dans l'évidement en autorisant la rotation et le coulissement du coulisseau 12 depuis sa position de repos jusqu'à une position d'association dans laquelle il associe deux chariots tel que précité, notamment en autorisant la rotation du coulisseau autour de son axe pour permettre l'entrée ou la sortie des pattes 14 dans les encoches 10.

En revanche, lorsqu'on déplace le coulisseau au-delà de cette position d'association, en direction opposée au centre de la face, la butée 26 vient en appui contre l'extrémité de l'évidement 24, c'est-à-dire contre le tronçon non évidé du coulisseau, de sorte qu'elle limite le coulissement du coulisseau au-delà de cette position.

Ces moyens de limitation, indépendants des moyens de blocage avec pattes et encoches, facilitent la manoeuvre du coulisseau en limitant son coulissement à l'intérieur de la course utile. Ils facilitent notamment sa manoeuvre au pied comme précité. On évite notamment la chute du coulisseau hors d'une extrémité de la gorge.

Bien entendu, on pourra apporter à l'invention de nombreuses modifications sans sortir du cadre de celle-ci.

Ainsi, on pourra proposer d'autres moyens de blocage du coulissement d'un coulisseau reçu dans la gorge (clavette, vis de serrage,...). On pourra diminuer le nombre de gorges et le nombre d'encoches par gorge. Les gorges pourront être limitées à deux faces latérales opposées du chariot ou à deux faces latérales adjacentes du chariot.

## Revendications

1. Chariot de manutention comportant un plateau (2) de forme générale rectangulaire présentant quatre faces latérales (4), et des roues (6) fixées au plateau, caractérisé en ce qu'au moins une face latérale (4) du plateau présente une gorge (8) s'étendant jusqu'à une extrémité de cette face, le chariot comportant un coulisseau allongé (12) mobile à coulissement dans la gorge (8) et adapté pour s'étendre simultanément dans les gorges de deux chariots adjacents.

2. Chariot selon la revendication 1, caractérisé en ce que le coulisseau (12) est adapté pour s'étendre simultanément dans les gorges (8) de deux chariots contigus en contact mutuel par leurs faces latérales (4).

3. Chariot selon l'une des revendications 1 à 2, caractérisé en ce qu'il comporte des moyens de blocage (10, 14) du coulissement du coulisseau (12) s'étendant simultanément dans les deux gorges (8).

4. Chariot selon la revendication 3, caractérisé en ce que la gorge (8) et le coulisseau (12) sont conformés de sorte que le coulisseau est mobile à rotation dans la gorge par rapport au chariot autour d'un axe longitudinal du coulisseau, les moyens de blocage comprenant au moins une encoche (10) s'étendant sur la face latérale (4) du plateau et débouchant dans la gorge (8), et au moins deux pattes (14) du coulisseau (12) s'étendant radialement en saillie du coulisseau, l'encoche (10) étant conformée et disposée pour que les pattes (14) du coulisseau soient reçues simultanément dans les encoches de deux chariots adjacents.

5. Chariot selon la revendication 4, caractérisé en ce que la face latérale (4) du plateau présente au moins deux encoches (10) débouchant dans la gorge, les encoches étant disposées pour recevoir simultanément les deux pattes (14) du coulisseau.

6. Chariot selon la revendication 5, caractérisé en ce que la face latérale (4) du plateau présente au moins trois encoches (10) débouchant dans la gorge.

7. Chariot selon l'une des revendications 4 à 6, caractérisé en ce qu'au moins une patte (14) du coulisseau comporte une portion de bord (16) s'étendant à distance de la paroi du plateau lorsque la patte (14) est reçue dans l'encoche (10).

8. Chariot selon l'une des revendications 4 à 7, caractérisé en ce qu'au moins une patte (14) du coulisseau est adaptée à s'étendre en saillie d'une face inférieure (20) du plateau lorsqu'elle est reçue dans l'encoche (10).

9. Chariot selon l'une des revendications 3 à 8, caractérisé en ce que le chariot comporte des moyens (22, 24, 26) pour limiter le coulissement du coulisseau (12) dans la gorge (8) en direction du centre de la face (4) associée et/ou en direction opposée à ce centre, ces moyens de limitation étant indépendants des moyens de blocage (10, 14).

10. Chariot selon l'une des revendications 1 à 9, caractérisé en ce que deux faces latérales opposées (4) du chariot présentent une gorge (8).

11. Chariot selon l'une des revendications 1 à 10, caractérisé en ce que deux faces latérales adjacentes (4) du chariot présentent une gorge (8).

12. Chariot selon l'une des revendications 1 à 11, caractérisé en ce que chaque face latérale (4) du chariot présente une gorge (8).

13. Chariot selon l'une des revendications 11 ou 12, caractérisé en ce que chaque chariot comporte deux coulisseaux (12) associés à des faces adjacentes (4) du chariot.

14. Chariot selon l'une des revendications 1 à 13, caractérisé en ce que la gorge (8) est suffisamment profonde pour que le coulisseau (12) s'étende totalement en retrait de la face latérale (4) présentant la gorge.

15. Chariot selon l'une des revendications 1 à 14, caractérisé en ce que la gorge (8) s'étend d'une extrémité à l'autre de la face latérale (4).

16. Ensemble de chariots de manutention, caractérisé en ce que les chariots sont conformes à l'une des revendications précédentes.
